# EUROPÄISCHE PATENTANMELDUNG

(11) **EP 2 426 431 A2**
(43) Veröffentlichungstag der Anmeldung: **07.03.2012**
(21) Anmeldenummer: 11178642.2
(22) Anmeldetag: 24.08.2011
(51) Int. Cl.: F24J 2/38, G05D 3/10, H01L 31/042

(54) **System zum sonnenstandsabhängigen Nachführen von Solarzellenmodulen**

(30) Priorität: 02.09.2010 DE 202010008439 U
(71) Anmelder: Reis Group Holding GmbH & Co. KG, 63785 Obernburg (DE)
(72) Erfinder: Kroth, Eberhard, 63785 Obernburg (DE)
(74) Vertreter: Stoffregen, Hans-Herbert

(57) **Zusammenfassung**

Die Erfindung bezieht sich auf ein System (SYS) zum sonnenstandsabhängigen Nachführen von Solarzellenmodulen (SZM) einer Solaranlage (SA), umfassend eine Antriebseinrichtung (AER) für eine Gruppe von Antriebseinheiten (AE) zum Nachführen der Solarzellenmodule (SZM), wobei jeder Antriebseinheit (AE) eine Ansteuereinheit (ASE) zugeordnet ist und die Ansteuereinheiten (ASE) mit einer gemeinsamen Energieversorgung (EV) sowie einem Datenbus (DS) verbunden sind. Ein entsprechendes System zum sonnenstandsabhängigen Nachführen von Solarzellenmodulen soll derart weitergebildet werden, dass sowohl die Ansteuerung als auch die hardwaremäßige Verkabelung im Vergleich zum Stand der Technik vereinfacht wird. Hierzu ist vorgesehen, dass die Gruppe von Ansteuereinheiten (ASE) über eine gemeinsame Energie- und Datenübertragungsleitung (EDL) mit einem Buskoppler (BK) verbunden ist, dass der Buskoppler (BK) einerseits mit der Energieversorgung (EV) zur Einkopplung von Energie und andererseits mit dem Datenbus zur Einkopplung von Daten in die Energie- und Datenübertragungsleitung (EDL) gekoppelt ist und dass eine der Ansteuereinheiten (ASE) als Master-Ansteuereinheit (MASE) ausgebildet und die weiteren Ansteuereinheiten (ASE) der Gruppe als Slave-Ansteuereinheiten (SASE) ausgebildet und über die Energie- und Datenleitung (EDL) mittels der Master-Ansteuereinheit (MASE) steuerbar sind.

## Beschreibung

Die Erfindung bezieht sich auf ein System zum sonnenstandsabhängigen Nachführen von Solarzellenmodulen einer Solaranlage, umfassend eine Antriebseinrichtung für eine Gruppe von Antriebseinheiten zum Nachführen der Solarzellenmodule, wobei jeder Antriebseinheit eine Ansteuereinheit zugeordnet ist und die Ansteuereinheiten mit einer gemeinsamen Energieversorgung sowie einem Datenbus verbunden sind.

Ein solches System ist beispielsweise in der DE-B-10 2007 050 031 beschrieben. Dieses umfasst eine Antriebseinrichtung mit einer dem Solarmodul zugeordneten Antriebseinheit zum sonnenstandsabhängigen Nachführen des Solarmoduls und einer Ansteuereinheit zum Ansteuern der Antriebseinheit, wobei eine Mehrzahl von jeweils einen Wechselrichter umfassenden Ansteuereinheiten und/oder eine Mehrzahl von Antriebseinheiten mittels einer gemeinsamen Batterieeinheit mit elektrischer Energie versorgt sind, wobei die Batterieeinheit im Normalbetrieb mittels eines zwischen dem Stromversorgungsnetz und der Batterieeinheit angeordnetem Ladegerät aufladbar ist.

Die Antriebseinrichtung umfasst neben der Mehrzahl von Antriebseinheiten und der Mehrzahl von Ansteuereinheiten ein dezentrales Steuermodul, das mit den Antriebsteilnehmermodulen der Ansteuereinheiten über ein Bussystem verbunden ist. Dabei sind das dezentrale Steuermodul als ein Bus-Master und die Antriebsteilnehmermodule als Bus-Slaves ausgebildet.

Den Antriebseinheiten ist jeweils eine Antriebssteuereinheit vorgelagert, die einen Stromrichter und ein Antriebsteilnehmermodul umfasst.

Jeder der Stromrichter ist eingangsseitig über jeweils eine Energieversorgungsleitung mit einer Batterieeinheit und ausgangsseitig mit der Antriebseinheit verbunden. Die Batterieeinheit ist eingangsseitig über ein Ladegerät mit einem Stromversorgungsnetz verbunden, das beispielsweise eine Wechselspannung in Höhe von 230 Volt bereitstellt.

Da sowohl ein Bus-System als auch separate Energieversorgungsleitungen für jede Antriebssteuerung vorgesehen sind, ist insbesondere bei großen Solaranlagen mit hohem Verkabelungsaufwand einerseits für den Datenbus und andererseits für die Energieversorgung zu rechnen. Ferner muss jede Ansteuereinheit sowohl einen Anschluss für einen Datenbus als auch einen Anschluss für die Energieversorgungsleitung aufweisen.

Der DE-A-10 2009 039 044 ist eine Photovoltaikanlage mit mindestens einer Solarzelleneinheit zu entnehmen, die in zwei vorzugsweise senkrecht zueinander stehenden Achsen dem Sonnenstand nachführbar ist. Für jede der zwei Achsen ist ein programmgesteuerter Antrieb vorgesehen. Die Antriebe der Solarzelleneinheit weisen jeweils eine computergesteuerte Steuerung auf, die wenigstens aus Sollwertdaten Steuersignale generiert und Messdaten sammelt und/oder verarbeitet. Einer der Antriebe der Solarzelleneinheit ist als ein Master-Antrieb und der andere als ein Slave-Antrieb ausgebildet, wobei der Master-Antrieb Sollwertdaten für den Slave-Antrieb bereitstellt und Messdaten mindestens des Slave-Antriebs sammelt. Der Master-Antrieb ist so ausgebildet, dass er den Betrieb des Slave-Antriebs koordiniert und mindestens Sollwertdaten und Messdaten für den Slave-Antrieb bereitstellt.

Der vorliegenden Erfindung liegt die Aufgabe zugrunde, ein System zum sonnenstandsabhängigen Nachführen von Solarzellenmodulen derart weiterzubilden, dass sowohl die Ansteuerung als auch die hardwaremäßige Verkabelung vereinfacht wird.

Zur Lösung der Aufgabe sieht die Erfindung im Wesentlichen vor, dass die Gruppe von Ansteuereinheiten über eine gemeinsame Energie- und Datenübertragungsleitung mit einem Buskoppler verbunden sind, dass der Buskoppler einerseits mit der Energieversorgung zur Einkopplung von Energie und andererseits mit dem Datenbus zur Einkopplung von Daten in die Energie- und Datenübertragungsleitung gekoppelt ist und dass eine der Ansteuereinheiten als Master-Ansteuereinheit ausgebildet und die weiteren Ansteuereinheiten der Gruppe als Slave-Ansteuereinheiten ausgebildet und über die Energie- und Datenleitung mittels der Master-Ansteuereinheit steuerbar sind.

Vorzugsweise sind die Energie- und Datenleitungen als Powerline ausgebildet. Dadurch besteht die Möglichkeit, die Ansteuereinheiten auf einfache Weise miteinander zu koppeln und gleichzeitig Energie und Daten zu übertragen.

In bevorzugter Ausführungsform sind die Slave-Ansteuereinheiten synchron durch die Master-Ansteuereinheit ansteuerbar.

In weiterer bevorzugter Ausführungsform ist jeder Antriebseinheit ein Solarzellenmodul zugeordnet. In diesem Fall sind sowohl die Antriebseinheiten als auch die Solarzellenmodule mechanisch entkoppelt. Alternativ können die Solarzellenmodule über einen Träger mechanisch gekoppelt sein. In diesem Fall sind auch die Antriebseinheiten mechanisch gekoppelt.

Gemäß einer weiteren bevorzugten Ausführungsform ist die Energie- Datenübertragungsleitung als Drei-Drahtleitung ausgebildet, wobei die Signalübertragung über ein Versorgungsspannungsnetz wie 230 Volt-Netz oder 120 Volt-Netz erfolgt.

Ein weiterer Vorteil der Erfindung zeichnet sich dadurch aus, dass eine Gruppe von Ansteuereinheiten unmittelbar mit einem GPS-Sensor oder gleichwirkenden Sensor verbunden sein kann, so dass Daten unmittelbar in eine Gruppe von Ansteuereinheiten eingekoppelt werden können.

Alternativ besteht die Möglichkeit, Geo-Daten über das zentrale Bussystem in die Energie- und Datenübertragungsleitung einzukoppeln.

Gemäß einer weiteren bevorzugten Ausführungsform umfasst eine Gruppe von Ansteuereinheiten die Master-Ansteuereinheit und eine beliebige Anzahl von Slave-Ansteuereinheiten, vorzugsweise 14 Slave-Ansteuereinheiten.

Vorzugsweise sind die Gruppen von Ansteuereinheiten über Daten-Filtereinheiten voneinander entkoppelt.

Eine weitere bevorzugte Ausführungsform zeichnet sich dadurch aus, dass die Ansteuereinheit und die Antriebseinheit eine Einheit bilden, wobei die Ansteuereinheit direkt in der Antriebseinheit, d. h. im Antrieb bzw. Motor integriert sein kann.

Es ist vorgesehen, dass die Antriebseinheiten zur Definition einer Nullstellung bzw. Referenzstellung in eine Endstellung gegen einen Endanschlag steuerbar sind. Dadurch kann auf zusätzliche Einrichtungen zur einmaligen Erfassung der absoluten Position z. B. einen Referenzsensor verzichtet werden.

Vorzugsweise weist die Ansteuereinheit einen Anschluss für die Energie- und Datenleitung auf, wobei jede Ansteuereinheit über ein Koppelelement mit der Energie- und Datenübertragungsleitung verbunden ist. Alternativ kann die Ansteuereinheit auch zwei Anschlüsse für die Energie - und Datenübertragungsleitung aufweisen, wobei die Energie- und Datenübertragungsleitung durch die Ansteuereinheit durchgeschleift ist.

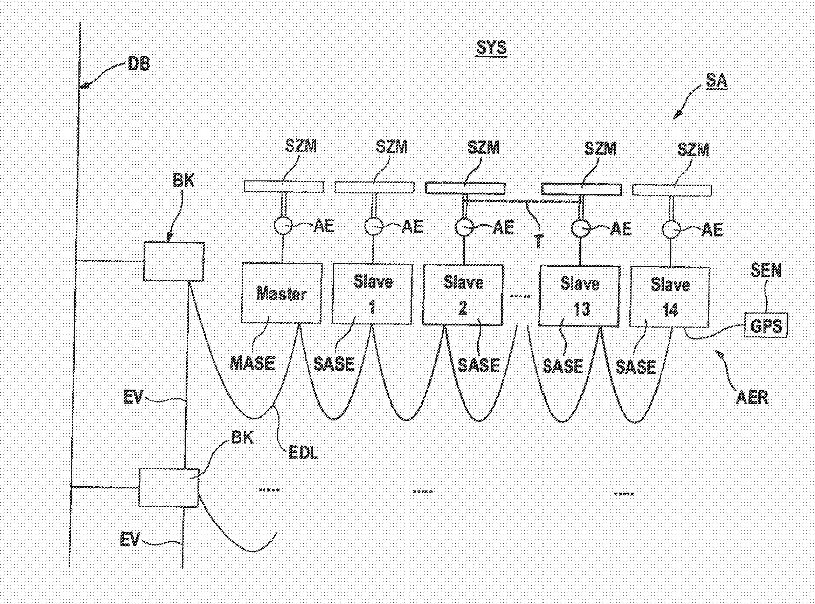

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von einem der Zeichnung zur entnehmenden bevorzugten Ausführungsbeispiel.

Die einzige Figur zeigt ein System SYS zum sonnenstandsabhängigen Nachführen von Solarzellenmodulen SZM einer Solaranlage SA.

Das System SYS umfasst eine Antriebseinrichtung AER mit einer Gruppe von Antriebseinheiten AE zum Nachführen der Solarzellenmodule SZM. Die Antriebseinheiten AE sind jeweils mit Ansteuereinheiten MASE, SASE verbunden.

Die Ansteuereinheiten MASE, SASE sind über eine gemeinsame Energie- und Datenübertragungsleitung EDL mit einem Buskoppler BK verbunden. Über den Busskoppler BK sind die Ansteuereinheiten MASE, SASE einerseits mit einer zentralen Energieversorgungsleitung EN zur Einkopplung von Energie und andererseits mit einem zentralen Datenbus DB zur Einkopplung von Daten in die Energie- und Datenübertragungsleitung EDL gekoppelt.

Eine der Ansteuereinheiten MASE, SASE ist als Master-Ansteuereinheit MASE ausgebildet, während die weiteren Ansteuereinheiten der Gruppe als Slave-Ansteuereinheiten SASA ausgebildet, die mittels der Master-Ansteuereinheit MASE über die Energie- und Datenleitung EDL ansteuerbar sind.

Im dargestellten Ausführungsbeispiel ist die Energie- und Datenleitung EDL als Powerline ausgebildet.

Die Slave-Antriebssteuerungen werden synchron durch die Master-Antriebssteuerung angesteuert, welche vorzugsweise durch die Ansteuereinheiten MASE, SASE durchgeschleift sind.

Üblicherweise ist jeder Antriebseinheit AE ein Solarzellenmodul SZM zugeordnet. In diesem Fall sind die Solarzellenmodule SZM mechanisch entkoppelt. Alternativ können die Solarzellenmodule SZM auch über einen Träger T mechanisch miteinander gekoppelt sein.

Die der Gruppe von Antriebssteuerungen AS verbindende Energie- und Datenleitung EDL kann unmittelbar mit einem GPS-Sensor SEN oder gleich wirkenden Sensor verbunden bzw. gekoppelt sein.

Die Solaranlage SA kann eine Vielzahl von Gruppen AER aufweisen, die ebenfalls über ein Koppelelement BK der mit der zentralen Energieversorgung EV sowie dem Bussystem DB gekoppelt sind.

Die Gruppe AER von Ansteuereinheiten ASE umfasst die Master-Ansteuereinheit MA-SE und vorzugsweise 14 Slave-Ansteuereinheiten SASE.

Durch die gemeinsame Energie- und Datenübertragungsleitung EDL wird im Vergleich zum Stand der Technik der Verkabelungsaufwand erheblich verringert und die Ausführungen der Ansteuereinheiten ASE insbesondere betreffend die Ausführung von Kabelanschlüssen erheblich vereinfacht. Insbesondere benötigen die Ansteuereinheiten keinen Busanschluss.

Über die zentrale Busleitung DB gesendete Geo-Daten können über die Energie- und Datenübertragungsleitung EDL gemeldet werden oder alternativ kann der GPS-Sensor SEN direkt an die Energie- und Datenübertragungsleitung EDL bzw. eine der Ansteuereinheiten ASE angekoppelt sein.

## Patentansprüche

1. System (SYS) zum sonnenstandsabhängigen Nachführen von Solarzellenmodulen (SZM) einer Solaranlage (SA), umfassend eine Antriebseinrichtung (AER) für eine Gruppe von Antriebseinheiten (AE) zum Nachführen der Solarzellenmodule (SZM), wobei jeder Antriebseinheit (AE) eine Ansteuereinheit (ASE) zugeordnet ist und die Ansteuereinheiten (ASE) mit einer gemeinsamen Energieversorgung (EV) sowie einem Datenbus (DS) verbunden sind,
**dadurch gekennzeichnet,**
**dass** die Gruppe von Ansteuereinheiten (ASE) über eine gemeinsame Energie- und Datenübertragungsleitung (EDL) mit einem Buskoppler (BK) verbunden sind, dass der Buskoppler (BK) einerseits mit der Energieversorgung (EV) zur Einkopplung von Energie und andererseits mit dem Datenbus zur Einkopplung von Daten in die Energie- und Datenübertragungsleitung (EDL) gekoppelt ist und dass eine der Ansteuereinheiten (ASE) als Master-Ansteuereinheit (MASE) ausgebildet und die weiteren Ansteuereinheiten (ASE) der Gruppe als Slave-Ansteuereinheiten (SASE) ausgebildet und über die Energie- und Datenleitung (EDL) mittels der Master-Ansteuereinheit (MASE) steuerbar sind.

2. System nach Anspruch 1,
**dadurch gekennzeichnet,**
**dass** die Energie- und Datenleitung (EDL) als Powerline ausgebildet ist.

3. System nach zumindest einem der vorhergehenden Ansprüche,
**dadurch gekennzeichnet,**
**dass** die Slave-Ansteuereinheiten (SASE) synchron durch die Master-Ansteuereinheit (MASE) ansteuerbar sind.

4. System nach zumindest einem der vorhergehenden Ansprüche,
**dadurch gekennzeichnet,**
**dass** jeder Antriebseinheit (AE) zumindest ein Solarzellenmodul (SZM) zugeordnet ist, wobei die Antriebseinheiten (AE) über die Solarzellenmodule (SZM) oder Träger (T) dieser mechanisch gekoppelt oder mechanisch entkoppelt sind.

5. System nach zumindest einem der vorhergehenden Ansprüche,
**dadurch gekennzeichnet,**
**dass** die Energie- und Datenleitung (EDL) als Drei-Drahtleitung ausgebildet ist,
wobei die Signalübertragung über ein Versorgungsspannungsnetz wie 230Volt-Netz oder 120 Volt-Netz erfolgt.

6. System nach zumindest einem der vorhergehenden Ansprüche,
**dadurch gekennzeichnet,**
**dass** die die Gruppe von Ansteuereinheiten (ASE) verbindende Energie- und Datenleitung (EDL) unmittelbar mit einem GPS-Sensor (SEN) oder gleichwirkenden Sensor verbunden bzw. gekoppelt ist.

7. System nach zumindest einem der vorhergehenden Ansprüche,
**dadurch gekennzeichnet,**
**dass** der zentrale Datenbus (DB) mit einer zentralen Steuer-/Überwachungseinrichtung (STE) verbunden ist, über die Geo-Daten an die Antriebseinheiten (AE) gesendet werden.

8. System nach zumindest einem der vorhergehenden Ansprüche,
**dadurch gekennzeichnet,**
**dass** eine Gruppe von Ansteuereinheiten (ASE) die Master-Ansteuereinheit (MASE) und eine beliebige Anzahl Slave-Ansteuereinheiten (SASE), vorzugsweise 14 Slave-Ansteuereinheiten (SASE) aufweist.

9. System nach zumindest einem der vorhergehenden Ansprüche,
**dadurch gekennzeichnet,**
**dass** die Ansteuereinheit (ASE) und die Antriebseinheit (AE) eine Einheit bilden.

10. System nach zumindest einem der vorhergehenden Ansprüche,
**dadurch gekennzeichnet,**
**dass** die Antriebseinheiten (AE) zur Definition einer Nullstellung bzw. Referenzstellung in eine Endstellung gegen einen Endanschlag steuerbar sind.

11. System nach zumindest einem der vorhergehenden Ansprüche,
**dadurch gekennzeichnet,**
**dass** die Ansteuereinheit (ASE) zwei Anschlüsse für die Energie- und Datenübertragungsleitung (EDL) aufweist, wobei die Energie- und Datenübertragungsleitung (EDL) durch die Ansteuereinheit (ASE) durchgeschleift ist, oder dass die Ansteuereinheit (ASE) einen Anschluss für die Energie- und Datenübertragungsleitung (EDL) aufweist und über ein Koppelelement mit dieser verbunden ist.
